# EUROPEAN PATENT APPLICATION

(11) **EP 1 953 640 A2**
(43) Date of publication of application: **06.08.2008**
(21) Application number: 08000785.9
(22) Date of filing: 16.01.2008
(51) Int. Cl.: G06F 3/12

(54) **Image forming system, image forming apparatus, and terminal**

(30) Priority: 31.01.2007 JP 2007021775
(71) Applicant: Brother Kogyo Kabushiki Kaisha, Nagoya-shi, Aichi 467-8561 (JP)
(72) Inventor: Sakamoto, Kana, Nagoya-shi Aichi 467-8562 (JP)
(74) Representative: Kuhnen & Wacker

(57) **Abstract**

An image forming system, image forming apparatus, and a terminal are provided. The image forming system includes an image forming apparatus comprising an image forming unit and a terminal, the system comprising a setting unit which sets a time taken until image formation is started, the time being based on at least one of identification information of an image forming apparatus, identification information of a terminal, and identification information of a user of the terminal; and a controller which controls a start of image formation, based on the time which is set by the setting unit. The apparatus includes an image forming unit; a setting unit; and a controller. The terminal includes a setting unit; and a controller.

## Description

### CROSS REFERENCE TO RELATED APPLICATION

The present application claims priority from Japanese Patent Application No. 2007-021775, which was filed on January 31, 2007, the disclosure of which is herein incorporated by reference in its entirety.

### TECHNICAL FIELD

Systems, apparatuses and terminals consistent with the present invention relate to an image forming system, an image forming apparatus, and a terminal, and more particularly, to an image forming system having print timing capability.

### BACKGROUND

In a generally-used image forming system comprising an image forming apparatus and a terminal, an image forming operation is started, as a general rule, as soon as a command for forming an image is issued from a user.

As another option, in an image forming system described by, for example, Japanese Published Unexamined Patent Application No. 2004-272480, a user sets a time when an image forming apparatus starts an image formation, and thereby the user can issue a timing command to start an image forming operation.

### SUMMARY

However, the image forming system described by Japanese Published Unexamined Patent Application No. 2004-272480 has a number of disadvantages. For example, there is a need to set the time at which printing is started every time a user issues a command to perform printing, and hence, disadvantageously, a great burden is imposed on the user, and the convenience of the image forming system is low.

Exemplary embodiments of the present invention address the above disadvantages and other disadvantages not described above. However, the present invention is not required to overcome the disadvantages described above, and thus, an exemplary embodiment of the present invention may not overcome any of the problems described above.

Accordingly, it is an aspect of the present invention to improve convenience (i.e., improve user-friendliness) by increasing the number of options available for setting an image-formation starting timing.

According to a first exemplary embodiment of the present invention, there is provided an image forming system comprising an image forming apparatus comprising an image forming unit and a terminal to which the image forming apparatus is coupled, the image forming system comprising a setting unit which sets a time taken until image formation is started, the time being based on at least one of identification information which identifies an image forming apparatus, identification information which identifies a terminal, and identification information which identifies a user of the terminal; and a controller which controls a start of image formation, based on the time which is set by the setting unit.

Therefore, in the invention according to the first aspect, an image-formation starting timing can be set from a viewpoint different from that of Patent Document 1, and user-friendliness can be improved.

The invention according to a second aspect is characterized in that the image forming apparatus comprises a storage unit, and the controller controls the start of image formation by controlling a time at which data that has been stored in the storage unit is sent to the image forming unit.

Therefore, in the invention according to the second aspect, the image forming system according to the first aspect can be constructed without changing the computer, and hence can be easily constructed.

The invention according to a third aspect is characterized in that the controller controls the start of image formation by controlling a time at which data is transmitted from the terminal to the image forming apparatus.

Therefore, in the invention according to the third aspect, the image forming system according to the first aspect can be constructed without changing the computer, and hence can be easily constructed.

The invention according to a fourth aspect is characterized in that the image forming system comprising an image forming mode in which a standby state is started when an image forming command is issued, wherein the setting unit sets the time taken until image formation is started based on a length of time in the standby state.

Therefore, in the invention according to the fourth aspect, the time automatically set by the setting unit can be used as an advantageous time.

The invention according to a fifth aspect is characterized in that the image forming system further comprising a determining unit which determines whether a medium on which an image has already been formed remains in the image forming apparatus, wherein the setting unit sets the time taken until image formation is started based on a period ranging from a time at which an image forming command has been issued to a time at which it is determined by the determining unit that the medium no longer remains in the image forming apparatus.

Therefore, in the invention according to the fifth aspect, the time automatically set by the setting unit can be used as an advantageous time.

The invention according to a sixth aspect is characterized in that the setting unit sets the time taken until image formation is started by selecting a time among a plurality of times input in the past.

Therefore, in the invention according to the sixth aspect, there is no need to set time every time, and hence user-friendliness is improved.

The invention according to a seventh aspect is characterized in that the image forming system further comprising an informing unit which provides a notice that a measurement of the length of time in the standby state has begun.

Therefore, in the invention according to the seventh aspect, the user can recognize that the measurement to allow the setting unit to set time is executed, and hence user-friendliness can be improved.

The invention according to an eighth aspect is characterized in that the image forming system further comprising a storage unit which stores association data obtained by associating the time taken until image formation is started with at least one of the identification information which identifies the image forming apparatus, identification information which identifies the terminal, and identification information which identifies the user of the terminal, wherein a measurement of the length of time in the standby state is performed if the association data is not stored in the storage unit.

Therefore, in the invention according to the eighth aspect, user-friendliness can be improved.

The invention according to a ninth aspect is characterized in that the setting unit sets the time taken until image formation is started, based on a mean value of previous values of the length of time in the standby state.

Therefore, in the invention according to the ninth aspect, the time set by the setting unit can be used as a more advantageous time.

The invention according to a tenth aspect is characterized in that the setting unit further comprising an executing unit which permits the image forming unit to start the image formation before the time set by the setting unit elapses.

Therefore, in the invention according to the tenth aspect, the user can be prevented from being kept waiting more than is necessary even if the time set by the setting unit is improper.

The invention according to an eleventh aspect is characterized in that an image forming apparatus comprising: an image forming unit which forms an image; a setting unit which sets a time taken until image formation is started, based on at least one of identification information which identifies a terminal and identification information which identifies a user of the terminal; and a controller which controls a start of image formation based on the time set by the setting unit.

Therefore, in the invention according to the eleventh aspect, the image-formation starting timing can be set from a viewpoint different from that of Patent Document 1, and user-friendliness can be improved.

The invention according to a twelfth aspect is characterized in that a terminal to which an image forming apparatus comprises an image forming unit is coupled, the terminal comprising: a setting unit which sets a time taken until image formation is started, based on at least one of identification information which identifies an image forming apparatus, identification information which identifies a terminal, and identification information which identifies a user of the terminal; and a controller which controls a start of image formation by the image forming unit, based on the time set by the setting unit.

Therefore, in the invention according to the twelfth aspect, the image-formation starting timing can be set from a viewpoint different from that of Patent Document 1, and user-friendliness can be improved.

### BRIEF DESCRIPTION OF THE DRAWINGS

Exemplary embodiments of the invention will be described in detail with reference to the following figures wherein:
Fig. 1 is a schematic diagram showing an outline of an image forming system according to a first exemplary embodiment of the present invention;
Fig. 2 and Fig. 3 are a flowchart showing an operation of the image forming system according to the first embodiment of the present invention;
Fig. 4A shows a setting screen for setting secure printing or time-designated printing, Fig. 4B shows a setting screen for setting a password, and Fig. 4C shows a setting screen for time-designated printing;
Fig. 5 is a conceptual diagram showing an example of a printed-matter acquisition time database;
Fig. 6 and Fig. 7 are a flowchart showing an operation of an image forming system according to a second exemplary embodiment of the present invention;
Fig. 8 is a flowchart showing a control flow according to the second exemplary embodiment of the present invention;
Fig. 9A shows a setting screen for setting secure printing or time-designated printing, Fig. 9B shows a setting screen for setting a password, and Fig. 9C shows a setting screen for time-designated printing;
Fig. 10 is a diagram showing an example of printing command information relating to the settings set by the setting screens of Figs. 9A to 9C;
Fig. 11 is a conceptual diagram showing a table including printer information and T#start information; and
Fig. 12 is a conceptual diagram of a printing-data transmission time registering table.

### DETAILED DESCRIPTION OF EXEMPLARY EMBODIMENTS OF THE PRESENT INVENTION

Exemplary embodiments of the present invention will be hereinafter described with reference to the attached drawings. First Exemplary Embodiment

### 1. Outline of image forming system

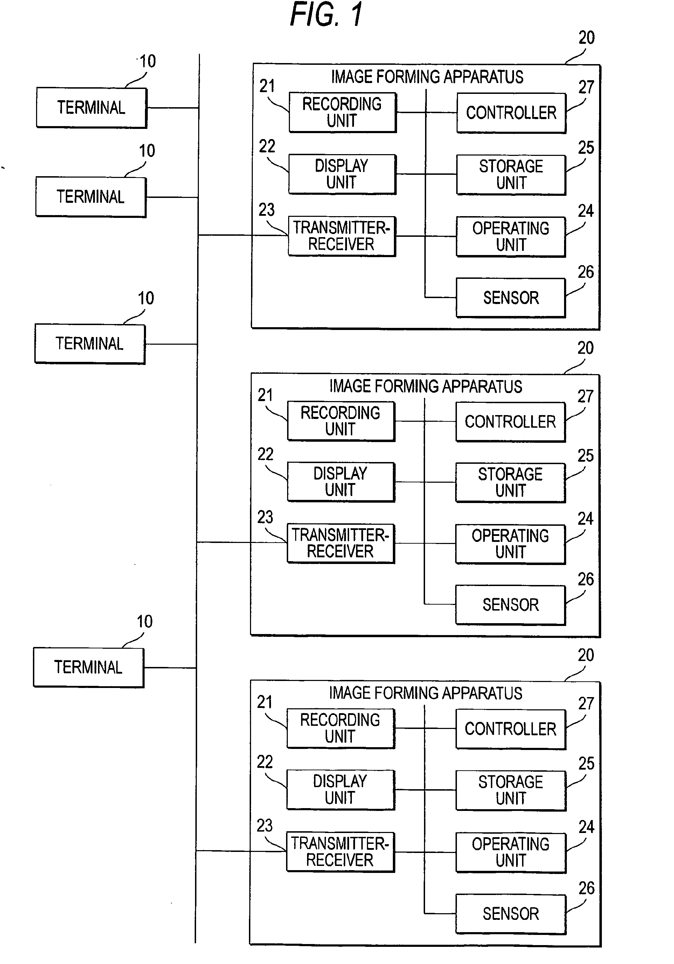

Fig. 1 is a schematic diagram showing the outline of an image forming system according to a first exemplary embodiment of the present invention. A terminal 10 comprises, for example, a central processing unit (CPU), a read only memory (ROM), and a random access memory (RAM). The terminal 10 may be a portable terminal, such as a cellular phone or personal data assistant (PDA), as well as a so-called personal computer.

The image forming apparatus 20 forms an image on a recording medium, such as a recording sheet of paper or an overhead projector (OHP) sheet. The image forming apparatus 20 according to this first exemplary embodiment is coupled to the terminal 10 via a network, such as Ethernet (registered trademark).

The image forming apparatus 20 comprises a recording unit 21, a display unit 22, a transmitter-receiver 23, an operatingunit 24, a storage unit 25, a sensor 26, andacontroller 27. The recording unit 21 forms an image on a recording medium. The display unit 22 displays various pieces of information.

The transmitter-receiver 23 transmits and receives data to and from the terminal 10. The operating unit 24 inputs an input or operation. The storage unit 25 is a nonvolatile storage unit, such as a flash memory. The sensor 26 optically detects whether a sheet (i.e., a recording medium) on which an image has been formed remains in a paper discharge unit of the image forming apparatus 20 based on, for example, the projection of light onto the paper discharge unit and the reception of this light. The controller 27 controls the operation of the recording unit 21 and the other elements.

### 2 Operation of the image forming system

### 2.1. Description of the drawings and others

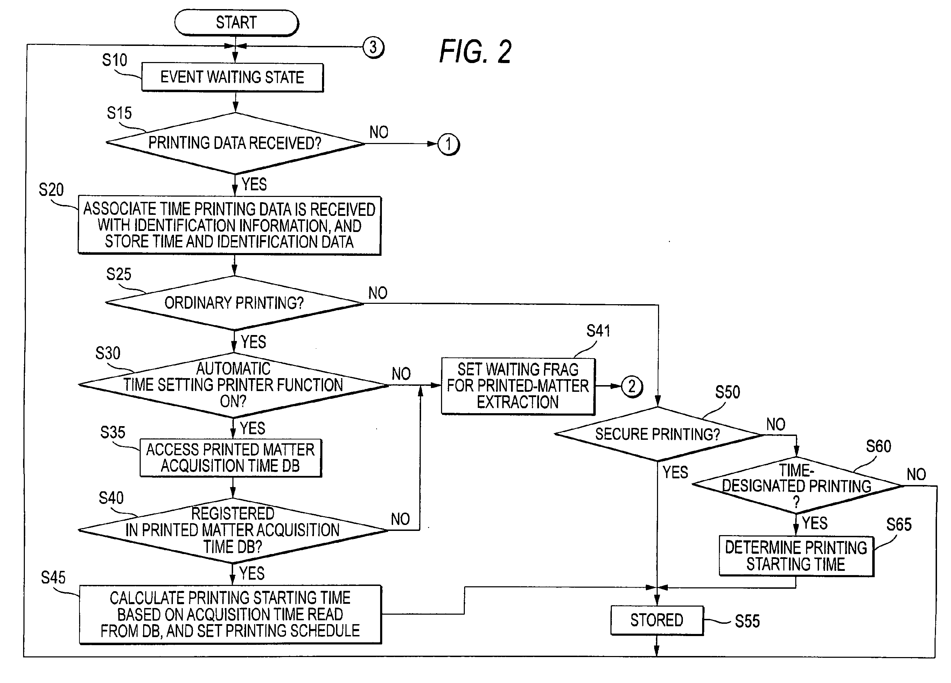

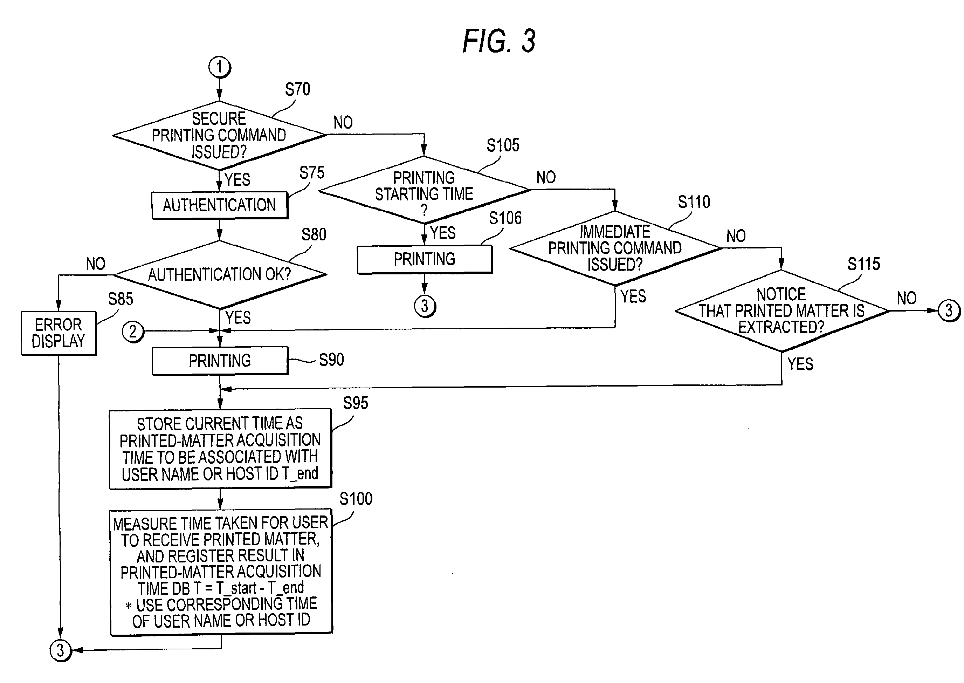

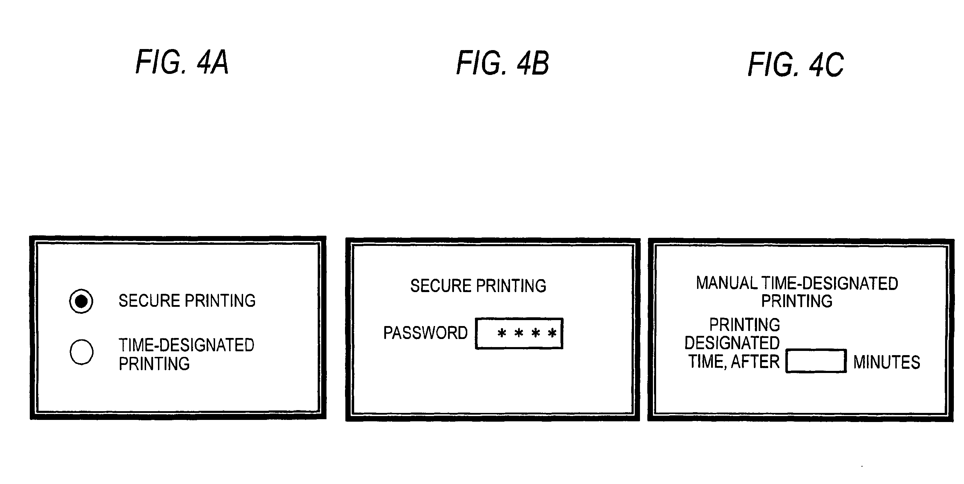

Fig. 2 and Fig. 3 are flowcharts, showing operation of the image forming system according to the first exemplary embodiment of the present invention. The operations depicted in Fig. 2 and Fig. 3 maybe executed by the image forming apparatus 20. Fig. 4A shows a setting screen for setting secure printing or time-designated printing, Fig. 4B shows a setting screen for setting a password, and Fig. 4C shows a setting screen for time-designated printing.

The term "secure printing" denotes a kind of image forming (printing) mode according to which printing data being in a standby state is printed when a command is issued to form an image (i.e., a command to perform printing). In other words, the term "secure printing" denotes a kind of image forming mode in which an image forming operation is not started until a command is issued to form an image by, for example, inputting a password after a first command has been issued to form an image. Such a command may be inputted manually by a user or automatically.

In the secure printing, printing data is temporarily stored in the image forming apparatus 20, and, when the user directly operates main parts of the image forming apparatus 20, actual printing is performed. Therefore, the secure printing is an effective means for addressing differences in a time and a distance between a user and the image forming apparatus 20.

In more detail, when a user commands the terminal 10 to perform printing, a setting screen shown in Fig. 4A is displayed on the display unit 22. If the user selects secure printing, a message to register a password is displayed on the display unit 22 as shown in Fig. 4B.

However, even if the user registers the password at this time, printing is not started in spite of the fact that a command to perform printing has been issued by the terminal 10. Only when the password is input via the operating unit 24 of the image forming apparatus 20 is the printing data which was sent to the image forming apparatus printed.

The "time-designated printing" is an image forming (printing) mode according to which printing is started at a time set by a user. When the time-designated printing is selected on the setting screen shown in Fig. 4A, a setting screen shown in Fig. 4C is displayed.

Thereafter, a time to determine a printing starting time is input, the actual printing starting time is calculated by the image forming apparatus 20 based on the time input thereby, and printing is started.

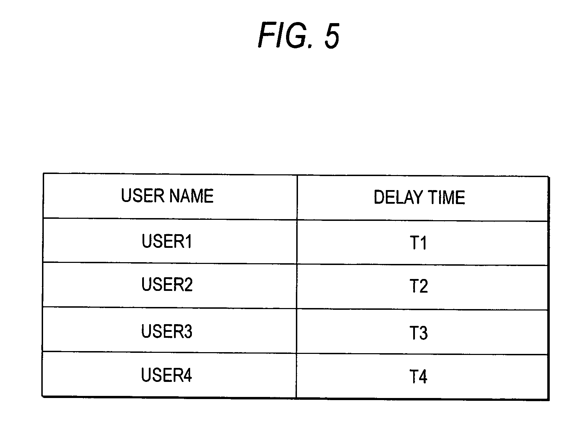

Fig. 5 is a conceptual diagram showing an example of a printed-matter acquisition time database stored in the storage unit 25. The printed-matter acquisition time database shows an association between identification information which identifies a user or identification information which identifies a terminal 10 that has transmitted printing data, and a delay time used to calculate the printing starting time. The identification information which identifies the user may be, for example, a user name. The identification information which identifies the terminal may be, for example, a host ID.

The "user name" may be determined based on, for example, a user name used when a user logs in (or logs on) the image forming system (e.g., the terminal 10). The "host ID" may be determined based on, for example, an internet protocol (IP) address or a terminal name which identifies the terminal 10 on the network.

### 2.2. Control flow (see Fig. 2)

Turning now to Fig. 2, if a power switch (not shown) of the image forming apparatus 20 is turned on, the control flow of Fig. 2 is started. An event waiting state is entered (S10). If an event occurs, it is determined whether the event is an event of receiving printing data (S15).

If it is determined that the event is receiving printing data (S15:YES), a time at which the printing data has been received (hereinafter, this time is denoted as "T#start") is associated with at least one of identification information which identifies a user who has issued a command to print the printing data and identification information which identifies a terminal that has transmitted the printing data, and the time and associated identification data are stored (S20).

Thereafter, it is determined whether the printing data which is received is printing-data to be printed by ordinary printing (S25). The term "ordinary printing" denotes printing other than secure printing or time-designated printing, i.e., printing by which printing data selected by neither of the printing modes in the setting screen of Fig. 4A is printed. Information to determine whether the printing data received from the terminal is printing-data to be printed by ordinary printing is embedded in a part of the printing data received therefrom.

If it is determined that the printing data received therefrom is printing-data to be printed by ordinary printing (S25: YES), it is determined whether an automatic time setting printing function is in an enabled state (S30).

The term "automatic time setting printing function" denotes a function to automatically set a time period (hereinafter, this time period is referred to as a "delay time") from a time at which a command to form an image (i. e., a print command) is issued to a time at which printing (image formation) is actually performed. In this first exemplary embodiment, it is possible to select either an enabled state for the automatic time setting printing function (i.e., operative) or a disabled state for the automatic time setting printing function (i.e., inoperative). The state of the automatic time setting printing function may be enabled or disabled, for example, by a user.

In more detail, based on either information that is set and input from the operating unit 24 and is then stored in the storage unit 25 or information that is input via the terminal 10 and is then input to the image forming apparatus 20 as a part of printing data, it is determined whether the automatic time setting printing function is in an enabled state. In this first exemplary embodiment, if information in which the automatic time setting printing function is in an enabled state is included in either one of the pieces of information described above, it is determined that the automatic time setting printing function is in an enabled state (i.e., operational).

If it is determined that the automatic time setting printing function is active (i.e., in an enabled state) (S30: YES), a printed mater acquisition time database is accessed (S35), and it is determined whether a delay time associated with a name of a user who has issued a command to print the printing data received therefrom is now registered in a printed-matter acquisition time database constructed in the storage unit 25 (S40).

If it is determined that the delay time associated with the user name is registered (S40:YES), a time at which printing is started is calculated based on the delay time read from the printed-matter acquisition time database, and a printing schedule is set (S45). Thereafter, this printing data is stored in the storage unit 25 (S55), and an event waiting state is again entered (S10).

At operation S45, a schedule is set which comprises identification information used to specify printing data that is past the printing starting time and time information indicating that the printing data is past the printing starting time.

The time at which printing is started is determined by adding to a current time a time obtained by subtracting an estimated time needed to print the printing data from the delay time, thus making it possible to obtain a state in which printing is completed just when a user comes to retrieve the printed matter from the image forming apparatus. Therefore, the user can be prevented from being kept waiting even if printing for another person breaks into printing for the user.

Alternatively, the time at which printing is started may be determined by merely adding the delay time to the current time. This procedure makes it possible to obtain a state in which printing is started when the user arrives at the image forming apparatus 20. Therefore, printed matter can be prevented from being printed and taken away by another user by mistake.

On the other hand, if it is determined that the delay time associated with the identification information is not registered (S40: NO), aprinted-matterpulling-out waiting flag is set (S41), and printing is started without storing the printing data (S90).

If it is determined that the printing data is not data to be printed by ordinary printing at operation S25 (S25: NO), it is determined whether the printing data is data to be printed by secure printing (S50). If it is determined that the printing data is data to be printed by secure printing (S50: YES), the printing data is stored (S55), and an event waiting state is again entered (S10).

On the other hand, if it is determined that the printing data is not data to be printed by secure printing (S50: NO), it is determined whether the printing data is data to be printed by time-designated printing (S60). If the printing data is not data to be printed by time-designated printing (S60: NO), an event waiting state is again entered (S10). If the printing data is data to be printed by time-designated printing (S60: YES), the printing starting time is determined based on information about the delay time included in the printing data (S65). Thereafter, the printing data is stored (S55), and an event waiting state is again entered (S10).

If the determined printing starting time at operation S65 has passed, a schedule is set which comprises identification information about printing data that was intended as a printing event and time information showing that it is past the printing starting time.

If it is determined that the automatic time setting printing function is not active at operation S30 (S30: NO), a printed-matter pulling-out waiting flag is set (S41). Thereafter, the printing (i.e., image formation) of printing data received from the terminal is started without calculating a delay time (S90).

If it is determined that it is not printing data that is received at operation S15 (S15 : NO), it is determined whether secure printing command has been issued. For example, it is determined whether a command to print the printing data stored in the storage unit 25 at operation S55 has been input from the operating unit 24 (S70).

If it is determined that a command to perform secure printing has been issued (S70: YES), a message requesting input of a password is displayed on the display unit 22 (S75). After a password is input, a process of authenticating the password is executed and it is determined if authentication has succeeded (S80).

The "secure printing instruction button" accepts an input to actually start secure printing. In this first exemplary embodiment of the present invention, the secure printing instruction button is provided in the operating unit 24.

If it is determined that the password input agrees with a password registered and embedded in printing data (S80:YES), the printing (image formation) of the printing data to be printed is started (S90). On the other hand, if it is determined that the passwords do not agree with each other (S80: NO), an error message is displayed on the display unit 22 (S85). Thereafter, an event waiting state is again entered (S10).

If it is determined that a command is not issued to perform secure printing at operation S70 (S70:NO), it is determined whether a printing starting time set at operation S45 or operation S65 has arrived (S105). If it is determined that the printing starting time exists (S105: YES), the printing (image formation) of printing data corresponding to the identification information input together with the event is started (S106). Thereafter, an event waiting state is again entered (S10).

On the other hand, if it is determined that the printing starting time has not yet arrived (S105: NO), it is determined whether a command to immediately start printing has been issued from the operation panel 24 (S110). If it is determined that a command to immediately start printing has been issued (S110: YES), the printing of the printing data is started at that time even if the printing starting time has not yet been reached (S90).

When the printing of the printing data is completed (S90), an end time thereof (hereinafter, this time is represented as "T#end") is associated with the identification information, i.e., either the user name information or the host ID information, and the resulting association data is stored (S95).

If it is determined that a command to immediately start printing has not been issued (S110: NO), it is determined whether printed matter is extracted from the paper discharge unit of the image forming apparatus 20 (S115). This determination may be made based on the output of a sensor 26. If it is determined that a printed-matter extracting flag is set in the storage unit 25 at operation S41 and that the printed matter has been extracted (S115:YES), the time at which the printed matter has been extracted (hereinafter, this time is also represented as "T#end") is associated with the identification information, i. e., either the user name information or the host ID information, and the resulting association data is stored, and, in addition, the printed-matter extraction waiting flag is reset (S95).

If the value "T#end" is stored (S95), a delay time, which is equivalent to a difference (T#start-T#end) between the T#start and the stored T#end, is associated with the identification information, i.e., either the user name information or the host ID information, and the resulting association data is stored in the printed-matter acquisition time database (S100).

In this first exemplary embodiment, a mean value of time measured by a plurality of time measuring operations is regarded as a delay time, and is registered in the printed-matter acquisition time database by use of the corresponding relationships between the user names and the "T#start and T#end" data already stored. In the first time measuring operation, the delay time is determined based only on a measurement time obtained by this measuring operation.

### 3. Features of the image forming system

According to the invention described in Japanese Published Unexamined Patent Application No.2004-272480, there is a need to set the time at which printing is started every time a user issues a command to perform printing, and hence, disadvantageously, a great burden is imposed on the user, and the convenience of the image forming system is low.

In contrast, in this first exemplary embodiment of the present invention, the time taken until printing is started may be automatically set (S45), and hence a burden imposed on a user can be reduced, and the convenience of the image forming system can be improved.

In addition, in this first exemplary embodiment, data transmitted from the terminal 10 to the image forming apparatus 20 is stored in the storage unit 25, and the printing starting timing (S90 and S106) is controlled. Therefore, the image forming system according to the first exemplary embodiment of the present invention canbe easily constructed without changing the terminal 10.

In addition, in this first exemplary embodiment, the time taken until printing is started is measured based on the operating time during secure printing. Therefore, a suitable delay time can be easily set.

In addition, in this first exemplary embodiment, a delay time is automatically set based on the measurement time until the time at which the sensor 26 determines that printed matter does not remain in the printer 20. Therefore, the delay time can be set as a suitable time.

In addition, in this first exemplary embodiment, a delay time is automatically set based on a mean value of time measured by a plurality of measuring operations. Therefore, the delay time can be set as a more suitable time.

In addition, in this first exemplary embodiment, if a command to immediately perform printing is issued, printing is started before the passage of a delay time. Therefore, the user can be prevented from being kept waiting if the automatically set delay time is improper.

In addition, in this first exemplary embodiment, the delay time is set for each identification information, i.e., for each user name and for each host ID. Therefore, the delay time set automatically can be set as a more suitable time. 4. Correspondence relationship between inventive specific matters and the embodiment

In this embodiment, step S100 corresponds to a setting unit recited in the appended Claims, step S90 corresponds to a controller recited in the appended Claims, the storage unit 25 corresponds to a storage unit recited in the appended Claims, and step S115 corresponds to a determining unit recited in the appended Claims.

### Second Exemplary Embodiment

In the first exemplary embodiment, the time at which printing is started is controlled by the image forming apparatus 20. However, in the second exemplary embodiment, the time at which printing is actually started is controlled by allowing a terminal 10 to control the time at which printing data is transmitted to the image forming apparatus 20. Therefore, in the second exemplary embodiment, the image forming apparatus 20 starts printing - other than secure printing - as soon as the printing data is received.

### 1. Description of the drawings and others

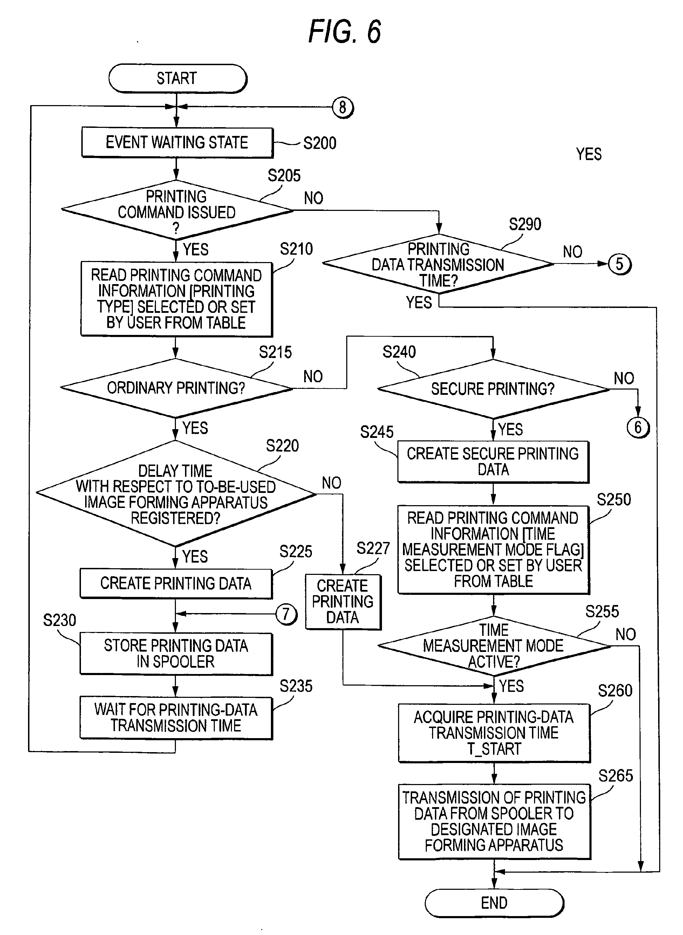

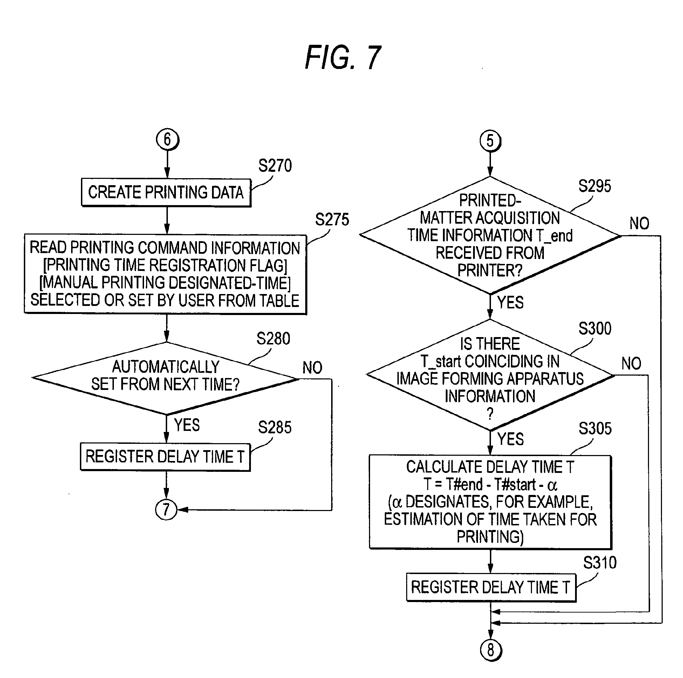

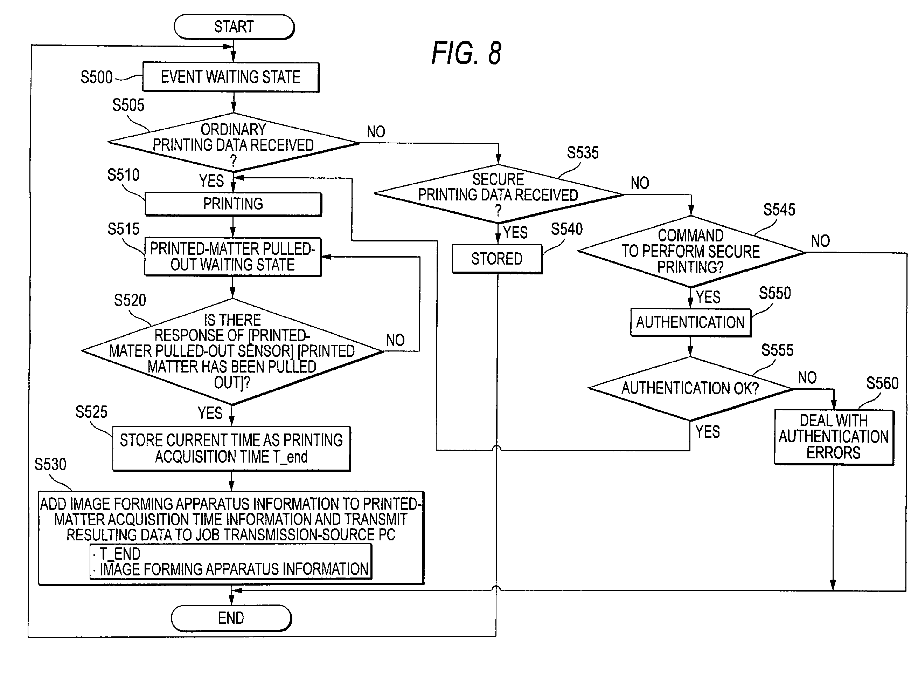

Fig. 6 and Fig. 7 are a flowchart showing an operation of the image forming system according to the second exemplary embodiment of the present invention. The operations shown in the flowchart may be executed by the terminal 10. Fig. 8 is a chart showing a control flow executed by the image forming apparatus 20.

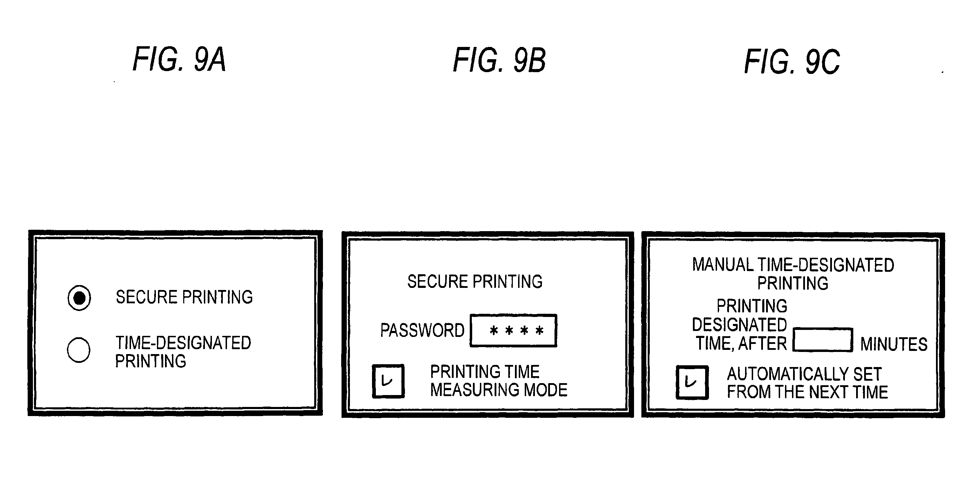

Fig. 9A shows a setting screen for setting secure printing or time-designated printing, Fig. 9B shows a setting screen for setting a password, and Fig. 9C shows a setting screen for time-designated printing.

In secure printing, printing is not immediately started even if a command to start printing is issued via the terminal 10. Printing data is temporarily stored in the image forming apparatus 20, and the start of printing is delayed from the time at which a command to start printing is substantially given by the terminal 10 to the time at which a command to start printing is again issued, for example, by allowing the user to input a password into the body of the image forming device. Therefore, the secure printing makes it possible to estimate a time that depends on a distance between the user and the image forming apparatus 20.

Accordingly, a selection unit that selects a printing time measuring mode in which the delay time described above is determined by use of secure printing is provided in the setting screen (see Fig. 9B) used to input a password according to this second exemplaryembodiment. Therefore,when the printing time measuring mode is selected, secure printing is performed while measuring the delay time to construct a printing-data transmission time registering table. Therefore, a command to perform printing is issuedon the understanding that the printing time measuring mode is used. If the printing time measuring mode is selected, a representation that a printing time measuring mode is continuing during a periodmaybe displayed on the display unit of the terminal 10 or on the display unit 22 of the image forming apparatus 20.

When "Automatic setting from the next time" is selected in the setting screen of Fig. 9C, the time input this time is registered as a printing data transmission time from the next time. This second exemplary embodiment (Figs. 9A to 9C) are the same as the first exemplary embodiment (Figs. 4A to 4B), except that the printing time measuring mode can be selected in the setting screen of Fig. 9B and that "Automatic setting from next time" can be set in the setting screen of Fig. 9C, and hence a detailed description thereof is omitted.

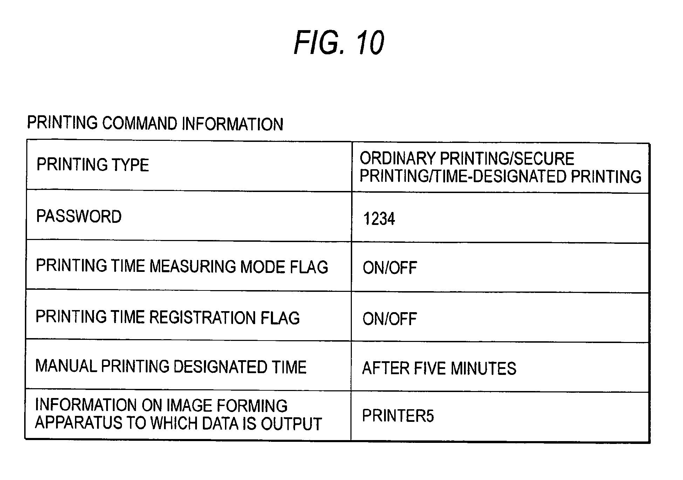

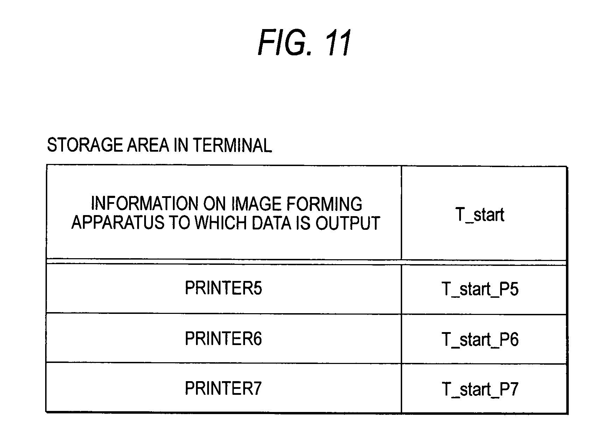

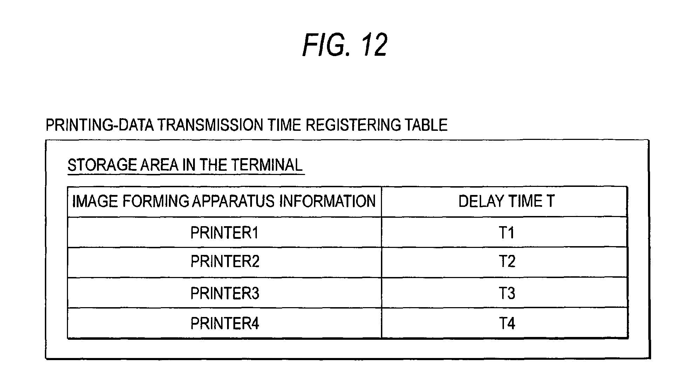

Fig. 10 is a diagram that shows printing command information denoting the contents set by the setting screen shown in Fig. 9. Fig. 11 is a conceptual diagram that shows a table consisting of printer information, to which data is output, stored in a storage area (storage unit such as HDD) provided in the computer 10 and T#start. Fig. 12 is a conceptual diagram of a printing-data transmission time registering table.

### 2. Description of operations

### 2.1. Operation of the terminal (see Fig. 6 and Fig. 7)

Fig. 6 and Fig. 7 each show a control flow of a printing control program that is started when a printing command is given for data to be printed via application software installed in the terminal 10. The application software may be a word process or other application program that allows printing of data.

When control is started, an event waiting state is entered (S200). If an event occurs, it is determined whether the event is a printing command (S205). If it is determined that this event is a printing command (S205 : YES), printing command information (see. Fig. 10) is read (S210), and it is determined whether ordinary printing should be performed (S215).

Since this control flow is started by a printing command issued by the user, it is always determined that this is a printing command issued by the user at step S205, which is an initial step, after being started.

If it is determined that ordinary printing should be performed at operation 5215 (S215: YES), it is determined whether a delay time T corresponding to an image forming apparatus designated as an image forming apparatus by which data to be printed by ordinary printing is printed (hereinafter, this image forming apparatus is referred to as a "designated image forming apparatus" 20) has already been registered, based on the printing-data transmission time registering table (S220).

If it is determined that the delay time T corresponding to the designated image forming apparatus 20 has been registered (S220: YES), data having a format (for example, PDL format) in which data can be printed by the image forming apparatus 20 (hereinafter, this data is referred to as "printing data") is created based on data formed by application software (S225) .

Thereafter, the printing data created above is stored in a specific area (hereinafter, this specific area is referred to as "spooler") secured by a storage device (S230), and a printing-data transmission time waiting state is reached (S235). The term "printing data transmission time" denotes a time obtained by adding the delay time T to the time at which a printing command is input.

On the other hand, if it is determined that the delay time T corresponding to the designated image forming apparatus 20 has not been registered (S220: NO), printing data is created based on data formed by application software (S227). Thereafter, the printing data is stored in the spooler, and is transmitted from the spooler to the image forming apparatus 20 almost as soon as "T#start" is acquired as the transmission time of the printing data (S260 and S265), and the control ends.

If it is determined that the data should not be printed by ordinary printing at operation S215 (S215: NO), it is determined whether the data should be printed by secure printing (S240). If it is determined that the data should be printed by secure printing (S240: YES), secure printing data is created, and is stored in the spooler (S245).

The term "secure printing data" denotes data in which mode information that the mode is a secure printing mode, password information, etc., are added to the printing data.

Thereafter, printing command information (see Fig. 10) is read (S250), and it is determined whether the printing time measuring mode is active (S255). If it is determined that the printing time measuring mode is active (S255: YES), the secure printing data is transmitted from the spooler to the image forming apparatus 20 almost as soon as "T#start" is acquired as the transmission time of the secure printing data (S260 and S265), and the control ends.

The "T#start" acquired at operation S260 is associated with identification information (hereinafter, referred to "printer information") used to identify the image forming apparatus 20, such as a printer name or an IP address, and the resulting association data is stored (see Fig. 11).

On the other hand, if it is determined that the printing time measuring mode is not active (S255: NO), the printing data is transmitted from the spooler to the image forming apparatus 20 without acquisition of the transmission time (T#start) (S265), and the control ends.

If it is determined that the data should not be printed by secure printing at operation S240 (S240: NO), it is determined that the data should be printed by time-designated printing, and then printing data is created (S270). Thereafter, printing command information is read (S275), and it is determined whether "automatic setting from the next time" (see Fig. 9C) has been selected based on the printing command information (see Fig. 10) (S280).

If it is determined that "automatic setting from the next time" has been selected (S280 : YES), the printing designated time (delay time T) input in the setting screen of time-designated printing (see Fig. 9C) is registered in the printing-data transmission time registering table (see Fig. 12) (S285), and then the printing data is stored in the spooler (S230).

On the other hand, if it is determined that "automatic setting from the next time" has not been selected (S280: NO), the printing data is stored in the spooler without registering the printing designating time (delay time T) in the printing-data transmission time registering table (S230).

If it is determined that the event generated at operation S205 is not a printing command, it is determined whether the current time is the printing data transmission time of the printing data stored in the spooler (S290). If it is determined that the current time is the printing data transmission time (S290: YES), the printing data is transmitted from the spooler to the image forming apparatus 20 (S265), and the control ends.

The printing data stored in the spooler is transmitted, and the data transmission time is associated with the printing data, and the resulting associated data is stored in the storage unit in the terminal 10.

On the other hand, if it is determined that the current time is not the printing data transmission time (S290: NO), it is determined whether printed-matter acquisition time information (T#end) acquired by the image forming apparatus 20 has been received by the terminal 10 (S295).

If it is determined that "T#end" has been received (S295:YES), it is determined whether information showing the transmission source of "T#end" transmitted from the image forming apparatus 20, i.e., "T#start" corresponding to image forming apparatus information has been stored in the table of Fig. 11 (S300).

If it is determined that "T#start" corresponding to image forming apparatus information has been stored in the table (S300 : YES), the delay time T is calculated (S305). Thereafter, the resulting delay time T is registered in the printing-data transmission time registering table (S310), and an event waiting state is again entered (S200).

In this second exemplary embodiment, a time (=T#start-T#end-α) obtained by subtracting a correction term α determined based on the amount of printing data from a difference between T#start and T#end is defined as delay time T, and the correction term α is a function that increases in proportion to an increase in the amount of printing data.

Therefore, since printing is just started when a user comes to take printedmatter, the printed matter can be prevented from being taken away by another person. Alternatively, if the correction term α is set to be 0, it is possible to create a state in which printing is completed when a user comes to take the printed matter.

If it is determined that T#end has not been received at operation S295 (S295: NO), or if it is determined that T#start corresponding to printer information has not been stored in the table (S300: NO), an event waiting state is entered without calculating and registering the delay time T (S200).

### 2.2. Operation of the image forming apparatus (see Fig. 8)

When the power switch of the image forming apparatus 20 is turned on, the control flow of Fig. 8 is started. An event waiting state is entered (S500). If an event occurs, it is determined whether ordinary printing data has been received (S505). Information on whether ordinary printing should be performed is embedded in a part of the printing data. If the data is not password-protected printing data (secure printing data), it is determined that ordinary printing is performed.

If it is determined that ordinary printing data has been received (S505: YES), the printing of the received printing data is started (S510), and a state of waiting until printed matter is removed is entered (S515).

Thereafter, it is determined whether printed matter has been extracted from the image forming apparatus 20 (S520). If it is determined that printed matter has been extracted (S520: YES), a time at which the printed matter has been extracted is stored as a piece of printed-matter acquisition time information (T#end) (S525), and the piece of printed-matter acquisition time information (i.e., "T#end") is transmitted to the terminal 10 from which the printing data has been received (S530), and the control ends.

If it is determined that ordinary printing data has not been received at operation S505 (S505: NO), it is determined whether secure printing data has been received (S535). If it is determined that secure printing data is received (S535: YES), the received printing data is stored (S540), and an event waiting state is entered (S500).

On the other hand, if it is determined that secure printing data is not received (S535: NO), it is determined whether a secure printing command has been received, i.e., whether a command to print the printing data stored at operation S540 (S545). The secure printing command may be input by, for example, pressing a secure printing command button (not shown) on the display panel 24.

If it is determined that a secure printing command has been received (S545: YES), a message requesting input of a password is displayed and a password is input (S550). A process of authenticating the password is executed (S555).

If it is determined that the input password corresponds to a password that has been previously registered(see, e.g., Fig. 9B) and embedded in a part of the printing data (S555:YES), the printing (image formation) of the printing data corresponding to the input password is started (S510). On the other hand, if it is determined that the input password does not correspond to the previously registered password (S555: NO), an error message and a message requesting re-input of the password are displayed (S560), and an event waiting state is again entered (S500).

If it is determined that a secure printing command has not been received at operation S545 (S545: NO), an event waiting state is again entered (S500).

### 3. Features of the image forming system according to the second exemplary embodiment of the present invention

In the second exemplary embodiment, the printing starting timing is controlled by controlling the timing at which data is transmitted from the terminal 10 to the image forming apparatus 20. Therefore, the image forming system according to the second exemplary embodiment of the present invention can be constructed without changing the image forming apparatus 20.

In addition, a delay time is measured by use of secure printing (in the printing time measuring mode) so that' a user recognizes that the delay time is being measured while seeing the display of the password setting screen (see Fig. 9B). Therefore, the user can realize that measuring to set a delay time is being performed, thus user-friendliness is improved.

In addition, in the second exemplary embodiment, the delay time T is set for each printer information. Therefore, the automatically-set delay time can be created as a more suitable time.

In addition, even if the delay time T is manually set, the delay time will be automatically set from the next time based on a printing-data transmission time registering table if "Automatic setting from the next time" (see Fig. 9C) is selected. Therefore, a burden imposed on a user can be reduced.

### 4. Correspondence relationship between inventive specific matters and the embodiment

In this embodiment, step S305 corresponds to a setting unit, step S265 corresponds to a controller recited in the appended Claims, step S520 corresponds to a determining unit recited in the appended Claims, and the display to select whether to use "Printing time measuring mode" of Fig. 9 (b) corresponds to an informing unit recited in the appended Claims.

### Additional Exemplary Embodiments

The above describe exemplary embodiments have been described taking an image forming system as an example. However, the present inventive concept is not limited to this. Rather, the present inventive concept can be embodied by a single terminal or a single printer.

In addition, in the above described exemplary embodiments, no consideration has been given to the printing ending time. However, the present inventive concept is not limited to this. For example, the printing starting time may be determined such that the printing ending time is first set, and then the printing starting time is set by a back calculation from the printing ending time.

While the present inventive concept has been shown and described with reference to certain exemplary embodiments thereof, it will be understood by those skilled in the art that various changes in form and details may be made therein without departing from the spirit and scope of the invention as defined by the appended claims.

## Claims

1. An image forming system comprising an image forming apparatus comprising an image forming unit and a terminal to which the image forming apparatus is coupled, the image forming system comprising:
a setting unit which sets a time taken until image formation is started, the time being based on at least one of identification information which identifies an image forming apparatus, identification information which identifies a terminal, and identification information which identifies a user of the terminal; and
a controller which controls a start of image formation, based on the time which is set by the setting unit.

2. The image forming system according to Claim 1, wherein the image forming apparatus comprises a storage unit, and the controller controls the start of image formation by controlling a time at which data that has been stored in the storage unit is sent to the image forming unit.

3. The image forming system according to Claim 1, wherein the controller controls the start of image formation by controlling a time at which data is transmitted from the terminal to the image forming apparatus.

4. The image forming system according to any one of Claim 1 to Claim 3, further comprising an image forming mode in which a standby state is started when an image forming command is issued, wherein the setting unit sets the time taken until image formation is started based on a length of time in the standby state.

5. The image forming system according to any one of Claim 1 to Claim 3, further comprising a determining unit which determines whether a medium on which an image has already been formed remains in the image forming apparatus, wherein the setting unit sets the time taken until image formation is started based on a period ranging from a time at which an image forming command has been issued to a time at which it is determined by the determining unit that the medium no longer remains in the image forming apparatus.

6. The image forming system according to any one of Claim 1 to Claim 3, wherein the setting unit sets the time taken until image formation is started by selecting a time among a plurality of times input in the past.

7. The image forming system according to Claim 4, further comprising an informing unit which provides a notice that a measurement of the length of time in the standby state has begun.

8. The image forming system according to Claim 4, further comprising a storage unit which stores association data obtained by associating the time taken until image formation is started with at least one of the identification information which identifies the image forming apparatus, identification information which identifies the terminal, and identification information which identifies the user of the terminal, wherein a measurement of the length of time in the standby state is performed if the association data is not stored in the storage unit.

9. The image forming system according to Claim 4, wherein the setting unit sets the time taken until image formation is started, based on a mean value of previous values of the length of time in the standby state.

10. The image forming system according to Claim 1, further comprising an executing unit which permits the image forming unit to start the image formation before the time set by the setting unit elapses.

11. An image forming apparatus comprising:
an image forming unit which forms an image;
a setting unit which sets a time taken until image formation is started, based on at least one of identification information which identifies a terminal and identification information which identifies a user of the terminal; and
a controller which controls a start of image formation based on the time set by the setting unit.

12. A terminal to which an image forming apparatus comprises an image forming unit is coupled, the terminal comprising:
a setting unit which sets a time taken until image formation is started, based on at least one of identification information which identifies an image forming apparatus, identification information which identifies a terminal, and identification information which identifies a user of the terminal; and
a controller which controls a start of image formation by the image forming unit, based on the time set by the setting unit.
